# EUROPÄISCHE PATENTSCHRIFT

(11) **EP 3 308 987 B1**
(45) Veröffentlichungstag und Bekanntmachung des Hinweises auf die Patenterteilung: **19.08.2020**
(21) Anmeldenummer: 16197222.9
(22) Anmeldetag: 04.11.2016
(51) Int. Cl.: B60D 5/00

(54) **ÜBERGANG ZWISCHEN ZWEI GELENKIG MITEINANDER VERBUNDENEN FAHRZEUGEN ODER FAHRZEUGTEILEN**
TRANSITION BETWEEN TWO ARTICULATED VEHICLES, OR PARTS OF A VEHICLE
JONCTION ENTRE DEUX VÉHICULES OU DEUX PARTIES DE VÉHICULE RELIÉ(E)S DE MANIÈRE ARTICULÉE

(30) Priorität: 12.10.2016 EP 16193481
(43) Veröffentlichungstag der Anmeldung: 18.04.2018
(73) Patentinhaber: Hübner GmbH & Co. KG, 34123 Kassel (DE)
(72) Erfinder: Nebel, Christian, 34346 Hann. Münden (DE)
(74) Vertreter: Patentanwälte Walther Hinz Bayer PartGmbB

(56) Entgegenhaltungen:
- EP-A1- 2 335 995
- WO-A1-02/079017
- DE-T2- 60 019 272

## Beschreibung

Die vorliegende Erfindung betrifft einen Übergang zwischen zwei gelenkig miteinander verbundenen Fahrzeugen oder Fahrzeugteilen, umfassend mindestens einen Balg, wobei der Balg mittels eines Anschlussrahmens an jeweils einer Stirnwand eines Fahrzeugs oder Fahrzeugteils angeordnet ist, wobei mindestens eine stirnseitig an dem Anschlussrahmen anordbare Abdeckung des Anschlussrahmens vorgesehen ist. Das Dokument DE 600 19 272 T2 offenbart einen Übergang gemäß dem Oberbegriff des Anspruchs 1.

Der Anschlussrahmen dient der Verbindung des mindestens einen Balges mit der Stirnwand des Wagenkastens des Fahrzeuges oder Fahrzeugteiles.

Der Anschlussrahmen ist insofern ebenso wie der daran befestigte Balg tunnel- oder kastenförmig umlaufend an der Stirnwand des Wagenkastens des Fahrzeugteiles angeordnet. Zur Befestigung des Balges am Anschlussrahmen kann der Balg ein sogenanntes Endtuch aufweisen, das durch eine entsprechend mit Zähnen versehene Klemmnut aufnehmbar ist. D. h., das Balgtuch wird durch die Klemmnut gecrimpt aufgenommen. Der Anschlussrahmen selbst ist z. B. mittels Schrauben mit der Stirnwand des Wagenkastens des jeweiligen Fahrzeugs oder Fahrzeugteiles verbunden.

Nun ist bekannt, die Verschraubung des Anschlussrahmens mit der Stirnwand sichtbar zu lassen. D. h., dass die Verschraubung unmittelbar ersichtlich ist, wobei insofern festgestellt wurde, dass durch unbefugte Dritte die Verschraubung bzw. Teile davon gelöst wurden, was grundsätzlich zu Unfällen führen kann. Insofern ist ebenfalls bekannt, durch eine Abdeckung die Verschraubung des Anschlussrahmens abzudecken, um Unbefugte von einer Manipulation der Befestigung des Anschlussrahmens an der Stirnwand des Wagenkastens zu hindern. Diese bekannte Abdeckung ist mit dem Endtuch des Balges vernäht, und zusammen mit dem Endtuch des Balges durch eine entsprechende Klemmnut am Anschlussrahmen durch Sickung oder Crimpung gehalten. Nachteilig hierbei ist, dass ohne eine Beschädigung des Endtuchs des Balges und mithin des Balges die Abdeckung nicht austauschbar ist, d.h., für einen Austausch der Abdeckung muss der Balg demontiert werden. Darüber hinaus ist durch die Abdeckung der Anschlussrahmen des Balges nicht derart abgedeckt, dass er nicht durch unbefugte Dritte sichtbar wäre. D. h., dass insofern immer noch die Gefahr besteht, dass für Unbefugte die Verschraubung des Anschlussrahmens oder ganz allgemein die Befestigungsmittel zugänglich sind.

Die der Erfindung zugrunde liegende Aufgabe besteht demzufolge darin, die Abdeckung derart auszubilden, dass bei einem Austausch der Abdeckung, aus welchen Gründen auch immer, zumindest eine Beschädigung des Balges und hier insbesondere des Endtuches des Balges ausgeschlossen ist. Auch muss der Balg nicht demontiert werden, wenn die Abdeckung ausgetauscht werden muss.

Zur Lösung der Aufgabe wird erfindungsgemäß vorgeschlagen, dass eine Verbindungseinrichtung vorgesehen ist, durch die lediglich die Abdeckung mit dem Anschlussrahmen verbindbar ist. Das heißt, dass die Abdeckung durch eine Verbindungseinrichtung mit dem Anschlussrahmen in Verbindung steht, wobei die Verbindungseinrichtung ausschließlich der Verbindung der Abdeckung mit dem Anschlussrahmen dient. Mithin kann die Abdeckung unabhängig vom Balg aus dem Anschlussrahmen gelöst werden.

Vorteilhafte Merkmale und Ausgestaltung der Erfindung ergeben sich aus den Unteransprüchen.

So ist nach einem weiteren besonderen Merkmal der Erfindung vorgesehen, dass durch die Verbindungseinrichtung die Abdeckung lösbar mit dem Anschlussrahmen verbindbar ist, wobei zur Bereitstellung einer solchen lösbaren Verbindung insbesondere eine Kederverbindung vorgesehen ist. Das heißt, die lösbare Verbindung ist eine solche, bei der zur Lösung der Teile eine Beschädigung oder Zerstörung der Bauteile nicht erfolgt. Die Kederverbindung kann hierbei einen an der Abdeckung angeordneten Keder umfassen, der durch eine entsprechende Kedernut im Anschlussrahmen aufnehmbar ist.

Wird die Abdeckung im Bereich der Außenseite der Stirnwand des Fahrzeugs oder Fahrzeugteiles angeordnet, kann vorgesehen sein, dass die Abdeckung insbesondere an einem Ende und zwar hier insbesondere dem der Außenseite des Fahrzeugs zugewandten Ende abdichtend an der Stirnwand des Fahrzeugs oder Fahrzeugteils anliegt.

Nach einem weiteren Merkmal der Erfindung liegt die Abdeckung an dem Balg und insbesondere an dem Endtuch des Balges an.

Für die Befestigung des Endtuches des Balges am Abdeckrahmen kann am Abdeckrahmen eine Klemmnut vorgesehen sein, wobei die Klemmnut insbesondere eine Innenverzahnung aufweist, um durch Sicken oder Crimpen eine stabile Verbindung des Endtuchs mit dem Anschlussrahmen zu bewerkstelligen.

Durch die Anlage der Abdeckung an dem Endtuch des Balges soll verhindert werden, dass Feuchtigkeit in die Klemmnut zur Aufnahme des Endtuches des Balges eindringen kann. In diesem Zusammenhang ist des Weiteren vorgesehen, dass die Abdeckung zu beiden Enden eine Dichtlippe aufweist, wobei eine Dichtlippe am Endtuch anliegt und die bereits zuvor genannte Abdichtung bewirkt, und die andere Dichtlippe an der Stirnwand des Wagenkastens des entsprechenden Fahrzeuges oder Fahrzeugteiles. Vorteilhaft ist in diesem Zusammenhang des Weiteren vorgesehen, dass die Abdeckung als Profil unter Vorspannung mit seinem freien Ende, d. h. dem der Kederverbindung entgegengesetzten Ende an dem Endtuch des Balges bzw. dem Anschlussrahmen anliegt.

Vorteilhaft verjüngt sich das Abdeckprofil zu seinem freien Ende hin, d. h., mit seinem an dem Endtuch des Balges anliegenden Ende.

Nach einem weiteren Merkmal der Erfindung ist vorgesehen, dass der Anschlussrahmen selbst durch ein Dichtprofil gegen die Stirnwand des Fahrzeugs oder Fahrzeugteils dichtend an der Stirnwand anliegt. Hierdurch soll auch verhindert werden, dass in das Innere des Übergangs Feuchtigkeit eintreten kann.

Es wurde bereits in diesem Zusammenhang darauf hingewiesen, dass das Abdeckprofil bzw. die Abdeckung eine Dichtlippe aufweist, die ebenfalls an der Stirnwand des Wagenkastens des Fahrzeugs oder Fahrzeugteiles anliegt, und für eine Abdichtung gegenüber eintretender Feuchtigkeit sorgt. Diese zusätzliche Dichtlippe bewirkt nun, dass es völlig gleich ist, wie das Anschlussprofil eingebaut wird, d. h., ob die Abdeckung auf der Innenseite des Übergangs angeordnet ist oder auf der Außenseite, da in jedem Fall immer verhindert wird, dass Feuchtigkeit bereits in den Bereich der Anbindung des Anschlussrahmens an der Stirnwand des Wagenkastens des Fahrzeugs oder Fahrzeugteiles eindringt und dort beispielsweise für Rostbildung sorgt.

Anhand der Zeichnungen wird die Erfindung nachstehend beispielhaft näher erläutert.
- Fig. 1: zeigt ein Gelenkfahrzeug mit zwei gelenkig miteinander verbundenen Fahrzeugen, wobei zwischen den Fahrzeugen ein Übergang vorgesehen ist;
- Fig. 2: zeigt einen Schnitt gemäß der Linie II-II aus Fig. 1, wobei der besseren Übersichtlichkeit wegen lediglich der Anschlussrahmen an der Stirnwand des Fahrzeugs oder Fahrzeugteils erkennbar ist;
- Fig. 3: zeigt eine perspektivische Darstellung des Anschlussrahmens mit dem Abdeckprofil.

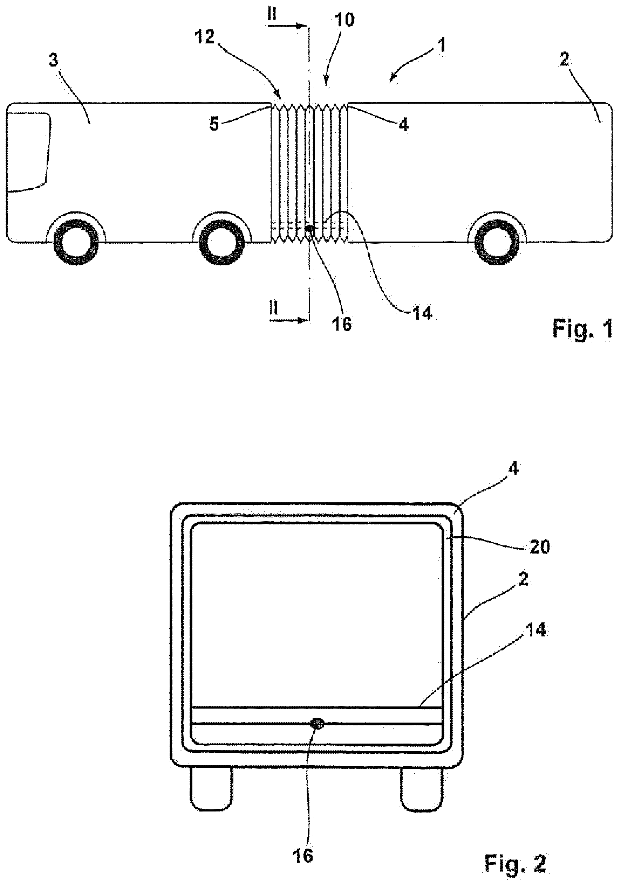

Das mit 1 bezeichnete Gelenkfahrzeug gemäß Fig. 1 zeigt die beiden Fahrzeuge 2 und 3 zwischen denen sich der Übergang 10 erstreckt. Der Übergang 10 umfasst den Balg 12 und die Übergangseinrichtung 14, beispielsweise eine Übergangsbrücke, die lediglich schematisch dargestellt ist und von dem Balg 12 tunnelartig umspannt wird. Ebenfalls durch den Balg 12 umgeben ist die schematisch dargestellte gelenkige Verbindung 16 zwischen den beiden Fahrzeugteilen 2, 3.

Der Balg 12 ist endseitig durch einen Anschlussrahmen in Form eines Anschraubrahmens 20 mit der jeweiligen Stirnwand 4, 5 des entsprechenden Wagenkastens des Fahrzeuges 2, 3 verbunden. Die Verbindung des Anschraubrahmens 20 mit der jeweiligen Stirnwand 4, 5 erfolgt durch eine Verschraubung. Der Anschraubrahmen 20 läuft, wie sich dies in Anschauung von Fig. 2 ergibt, tunnelförmig um, und verschließt somit allseitig den durch den Übergang gebildeten Innenraum.

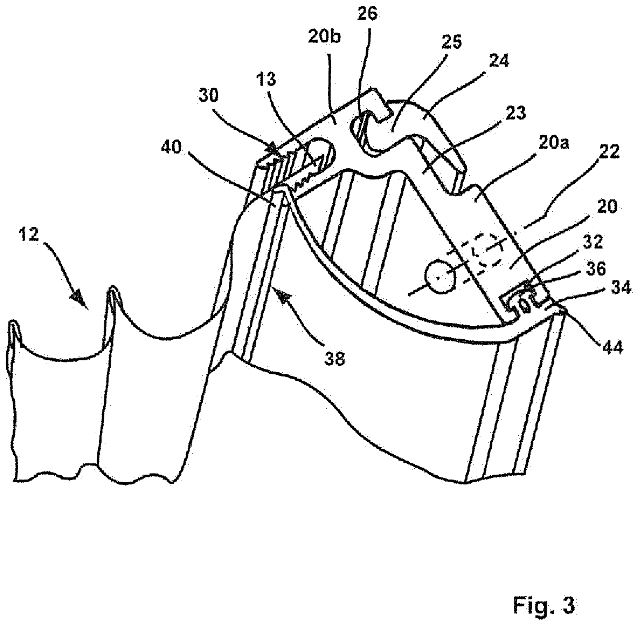

Der Anschraubrahmen 20 ist im Querschnitt L-förmig ausgebildet und weist einen langen Schenkel 20a und einen kurzen Schenkel 20b auf (Fig. 3). An der Stirnseite des langen Schenkels 20a befindet sich ein Absatz 23, wobei in dem Absatz 23 das Dichtprofil 24 angeordnet ist. Das Dichtprofil 24 weist einen Keder 25 auf, der durch eine entsprechende Kedernut 26 einschiebbar oder eindrückbar aufgenommen ist. An dem kurzen Schenkel 20b ist stirnseitig eine Klemmnut 30 angeordnet, wobei die Klemmnut 30 der Aufnahme des Endtuches 13 des Balges 12 dient. Die Klemmnut 30 ist innenseitig verzahnt, um eine dauerhafte und stabile Verbindung des Endtuches mit dem Anschraubrahmen 20 durch z. B. Crimpen zu bewirken.

An der Stirnseite des langen Schenkels 20a befindet sich als Teil der Verbindungseinrichtung eine weitere Kedernut 32, die der Aufnahme des Abdeckprofiles 34 dient. Das Abdeckprofil 34 weist als weiteres Teil der Verbindungseinrichtung ein Kederprofil 36 zur Aufnahme durch die Kedernut 32 auf. Entsprechend der L-förmigen Ausgestaltung des Anschlussrahmens 20 mit dem langen Schenkel 20a und dem kurzen Schenkel 20b ist das Abdeckprofil 34 nach Art eines Viertelkreises ausgebildet. Hierbei liegt das Abdeckprofil 34 mit seinem freien Ende (Pfeil 38) mit einer am Abdeckprofil 34 angeordneten Dichtlippe 40 an dem Endtuch 13 des Balges an. Am freien Endbereich des langen Schenkels 20a weist das Abdeckprofil 34 eine weitere Dichtlippe 44 auf, die an der Stirnwand 4, 5 des entsprechenden Wagenkastens eines Fahrzeugteiles 2, 3 anliegt.

Das Abdeckprofil 34 verjüngt sich in seiner Materialstärke von dem im Bereich der Dichtlippe 44 eingespannten Ende bis zur Dichtlippe 40.

### Bezugszeichenliste:

- 1: Gelenkfahrzeug
- 2: Fahrzeug (-teil)
- 3: Fahrzeug (-teil)
- 4: Stirnwand
- 5: Stirnwand
- 10: Übergang
- 12: Balg
- 13: Endtuch des Balges
- 14: Übergangseinrichtung
- 16: gelenkige Verbindung
- 20: Anschlussrahmen (Anschraubrahmen)
- 20a: langer Schenkel
- 20b: kurzer Schenkel
- 23: Absatz
- 24: Dichtprofil
- 25: Keder des Dichtprofils
- 26: Kedernut
- 30: Klemmnut
- 32: Kedernut
- 34: Abdeckprofil (Abdeckung)
- 38: Pfeil
- 40: Dichtlippe
- 44: Dichtlippe

## Patentansprüche

1. Übergang (10) zwischen zwei gelenkig miteinander verbundenen Fahrzeugen (2, 3) oder Fahrzeugteilen umfassend mindestens einen Balg (12), wobei der Balg (12) mittels eines Anschlussrahmens (20) an jeweils einer Stirnwand (4, 5) eines Fahrzeugs (2, 3) oder Fahrzeugteils durch Befestigungsmittel angeordnet ist,
wobei mindestens eine stirnseitig an dem Anschlussrahmen (20) anordbare Abdeckung (34) des Anschlussrahmens vorgesehen ist, wobei eine Verbindungseinrichtung (32, 34) vorgesehen ist, durch die lediglich die Abdeckung (34) mit dem Anschlussrahmen (20) verbindbar ist,
**dadurch gekennzeichnet,**
**dass** die Verbindungseinrichtung als Kederverbindung (32, 34) ausgebildet ist,
und **dass** die Abdeckung (34) an zumindest einem Ende abdichtend an der Stirnwand (4, 5) des Fahrzeugs (2, 3) oder Fahrzeugteils anliegt.

2. Übergang (10) nach Anspruch 1,
**dadurch gekennzeichnet,**
**dass** durch die Verbindungseinrichtung die Abdeckung lösbar mit dem Anschlussrahmen (20) verbindbar ist.

3. Übergang (10) nach einem der voranstehenden Ansprüche,
**dadurch gekennzeichnet,**
**dass** die Abdeckung an dem Balg (12) anliegt.

4. Übergang (10) nach Anspruch 3,
**dadurch gekennzeichnet,**
**dass** die Abdeckung an dem Endtuch (13) des Balges (12) anliegt.

5. Übergang (10) nach einem der voranstehenden Ansprüche,
**dadurch gekennzeichnet,**
**dass** die Abdeckung zu beiden Enden eine Dichtlippe (40, 44) aufweist.

6. Übergang (10) nach einem der voranstehenden Ansprüche,
**dadurch gekennzeichnet,**
**dass** die Abdeckung aus einem Elastomer ausgebildet ist.

7. Übergang (10) nach einem der voranstehenden Ansprüche,
**dadurch gekennzeichnet,**
**dass** die Abdeckung als Abdeckprofil (34) ausgebildet ist.

8. Übergang (10) nach einem der voranstehenden Ansprüche,
**dadurch gekennzeichnet,**
**dass** das Abdeckprofil (34) unter Vorspannung mit seinem freien Ende an dem Anschlussrahmen (20) und/oder an dem Endtuch (13) des Balges (12) anliegt.

9. Übergang (10) nach einem der voranstehenden Ansprüche,
**dadurch gekennzeichnet,**
**dass** das Abdeckprofil (34) zu seinem freien Ende hin verjüngt ausgebildet ist.

10. Übergang (10) nach einem der voranstehenden Ansprüche,
**dadurch gekennzeichnet,**
**dass** der Anschlussrahmen (20) ein Befestigungsmittel (30) zur Aufnahme des Endtuches (13) des Balges (12) aufweist.

11. Übergang (10) nach Anspruch 10,
**dadurch gekennzeichnet,**
**dass** das Befestigungsmittel als Klemmnut (30) ausgebildet ist.

12. Übergang (10) nach einem der voranstehenden Ansprüche,
**dadurch gekennzeichnet,**
**dass** der Anschlussrahmen (20) durch ein Dichtprofil (24) gegen die Stirnwand (4, 5) des Fahrzeugs (2, 3) oder Fahrzeugteils dichtend an der Stirnwand (4, 5) anliegt.

13. Übergang (10) nach einem der voranstehenden Ansprüche,
**dadurch gekennzeichnet,**
**dass** das Abdeckprofil (34) viertelkreisartig ausgebildet ist.

## Claims

1. A gangway (10) between two vehicles (2, 3) or parts of vehicles articulately connected to each other, comprising at least one bellows (12),
wherein the bellows (12) is arranged by means of a connecting frame (20) on a respective end wall (4, 5) of a vehicle (2, 3) or vehicle part by fastening means,
wherein at least one cover (34) of the connecting frame which can be arranged on the front side of the connecting frame (20) is provided,
wherein a connecting device (32, 34) is provided by which only the cover (34) can be connected to the connecting frame (20),
**characterized in that**
the connecting device is designed as a keder connection (32, 34), and that the cover (34) at least at one end sealingly abuts the end wall (4, 5) of the vehicle (2, 3) or vehicle part.

2. The gangway (10) according to claim 1,
**characterized in that**
the cover can be detachably connected to the connecting frame (20) by the connecting device.

3. The gangway (10) according to one of the aforementioned claims,
**characterized in that**
the cover rests against the bellows (12).

4. The gangway (10) according to claim 3,
**characterized in that**
the cover rests against the end cloth (13) of the bellows (12).

5. The gangway (10) according to one of the aforementioned claims,
**characterized in that**
the cover has a sealing lip (40, 44) at both ends.

6. The gangway (10) according to one of the aforementioned claims,
**characterized in that**
the cover is formed from an elastomer.

7. The gangway (10) according to one of the aforementioned claims,
**characterized in that**
the cover is designed as a cover profile (34).

8. The gangway (10) according to one of the aforementioned claims,
**characterized in**
**that** the cover profile (34) rests under pretension with its free end against the connecting frame (20) and/or against the end cloth (13) of the bellows (12).

9. The gangway (10) according to one of the aforementioned claims,
**characterized in that**
the cover profile (34) is designed so that it tapers towards its free end.

10. The gangway (10) according to one of the aforementioned claims,
**characterized in that**
the connecting frame (20) comprises a fastening means (30) for receiving the end cloth (13) of the bellows (12).

11. The gangway (10) according to claim 10,
**characterized in that**
the fastening means is designed as a clamping groove (30).

12. The gangway (10) according to one of the aforementioned claims,
**characterized in that**
the connecting frame (20) rests against the end wall (4, 5) of the vehicle (2, 3) or vehicle part by means of a sealing profile (24) so as to form a seal against the end wall (4, 5).

13. The gangway (10) according to one of the aforementioned claims,
**characterized in**
**that** the cover profile (34) is designed in the shape of a quarter circle.

## Revendications

1. Passage (10) entre deux véhicules (2, 3) ou parties de véhicules reliés entre eux de manière articulée, comprenant au moins un soufflet (12),
où le soufflet (12) est disposé au moyen d'un cadre de raccordement (20) sur une paroi frontale respective (4, 5) d'un véhicule (2, 3) ou d'une partie de véhicule par des moyens de fixation,
où au moins une couverture (34) du cadre de raccordement pouvant être disposée sur la face avant du cadre de raccordement (20) est prévue,
où un dispositif de liaison (32, 34) est prévu, par lequel seule la couverture (34) peut être reliée au cadre de raccordement (20), **caractérisé en ce que**
le dispositif de liaison prend la forme d'une liaison par bourrelets (32, 34),
et que la couverture (34) est en appui de manière étanche, au moins à une extrémité, sur la paroi frontale (4, 5) du véhicule (2, 3) ou de la partie du véhicule.

2. Passage (10) selon la revendication 1,
**caractérisé en ce que**
la couverture peut être reliée de manière amovible au cadre de raccordement (20) par le dispositif de liaison.

3. Passage (10) selon l'une des revendications précédentes,
**caractérisé en ce que**
la couverture est en appui contre le soufflet (12).

4. Passage (10) selon la revendication 3,
**caractérisé en ce que**
la couverture est en appui contre la toile d'extrémité (13) du soufflet (12).

5. Passage (10) selon l'une des revendications précédentes,
**caractérisé en ce que**
la couverture comporte une lèvre d'étanchéité (40, 44) aux deux extrémités.

6. Passage (10) selon l'une des revendications précédentes,
**caractérisé en ce que**
la couverture est formée d'un élastomère.

7. Passage (10) selon l'une des revendications précédentes,
**caractérisé en ce que**
la couverture prend la forme d'un profilé de couverture (34).

8. Passage (10) selon l'une des revendications précédentes,
**caractérisé en ce que**
le profilé de couverture (34) est en appui, sous précontrainte, avec son extrémité libre contre le cadre de raccordement (20) et/ou contre la toile d'extrémité (13) du soufflet (12).

9. Passage (10) selon l'une des revendications précédentes,
**caractérisé en ce que**
le profilé de couverture (34) est formé de manière à s'effiler vers son extrémité libre.

10. Passage (10) selon l'une des revendications précédentes,
**caractérisé en ce que**
le cadre de raccordement (20) comporte un moyen de fixation (30) pour recevoir la toile d'extrémité (13) du soufflet (12).

11. Passage (10) selon la revendication 10,
**caractérisé en ce que**
le moyen de fixation prend la forme d'une rainure de serrage (30).

12. Passage (10) selon l'une des revendications précédentes,
**caractérisé en ce que**
le cadre de raccordement (20) est en appui de manière étanche contre la paroi frontale (4, 5) du véhicule (2, 3) ou de la partie du véhicule au moyen d'un profilé d'étanchéité (24).

13. Passage (10) selon l'une des revendications précédentes,
**caractérisé en ce que**
le profilé de couverture (34) est en forme de quart de cercle.
